Europäisches Patentamt

European Patent Office

Office européen des brevets

(11) Publication number: **0 183 504 B1**

# EUROPEAN PATENT SPECIFICATION

(45) Date of publication of patent specification: **16.10.91**  (51) Int. Cl.⁵: **G05F 1/62, H02M 3/28**

(21) Application number: **85308536.3**

(22) Date of filing: **25.11.85**

The file contains technical information submitted after the application was filed and not included in this specification

(54) **A regulated high voltage supply.**

(30) Priority: **26.11.84 US 674887**

(43) Date of publication of application:
**04.06.86 Bulletin  86/23**

(45) Publication of the grant of the patent:
**16.10.91 Bulletin  91/42**

(84) Designated Contracting States:
**DE GB NL**

(56) References cited:
**EP-A- 0 052 180**
**EP-A- 0 191 482**
**US-A- 3 660 672**
**US-A- 3 879 649**

(73) Proprietor: **TEKTRONIX, INC.**
**Tektronix Industrial Park D/S Y3-121 4900**
**S.W. Griffith Drive P.O. Box 500**
**Beaverton Oregon 97077(US)**

(72) Inventor: **Thomas, Wayne D.**
**10900 S.W. 115th**
**Tigard Oregon 97223(US)**

(74) Representative: **Baillie, Iain Cameron et al**
**c/o Ladas & Parry Isartorplatz 5**
**W-8000 München 2(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

### Background of the Invention

Field of the Invention. The present invention relates to high voltage supplies, and more particularly to a supply which can generate more than one regulated high voltage output from a single high voltage secondary winding of a transformer.

Description of the Prior Art. The use of a flyback transformer to produce a single high voltage output for the anode of a cathode ray tube is well established. However, for special requirements, such as for dynamic focusing as described in United States Patent Number 4,672,276 entitled "CRT Astigmatism Correction Apparatus with Stored Correction Values" filed 29 May 1984 by Conrad J. Odenthal and Barry A. McKibben, a regulated intermediate high voltage supply is desired. Merely adding a second flyback transformer high voltage supply has the disadvantage of increased space requirements as well as increased cost.

U.S. 3,660,672 discloses a regulated supply comprising transformer means for generating a first and a second regulated voltage output, said supply including first regulating means in a primary circuit of said transformer means for regulating said first output and second regulating means for regulating said second output wherein said first and second regulating means interact with each other to correct for fluctuations in said first and second outputs.

The present invention provides a regulated voltage supply as disclosed in U.S. 3,660,672 characterised in that said first and second outputs are high-voltage outputs which are provided from different taps of a common secondary winding of the transformer means, and said second regulating means is arranged to sample said second high voltage output the output of said second regulating means being connected to the lower voltage end of said secondary winding, whereby an error signal, if any, is supplied for correcting the fluctuations in the second high voltage output and, by interaction, the first high voltage output.

Preferred embodiments are defined in the dependent claims.

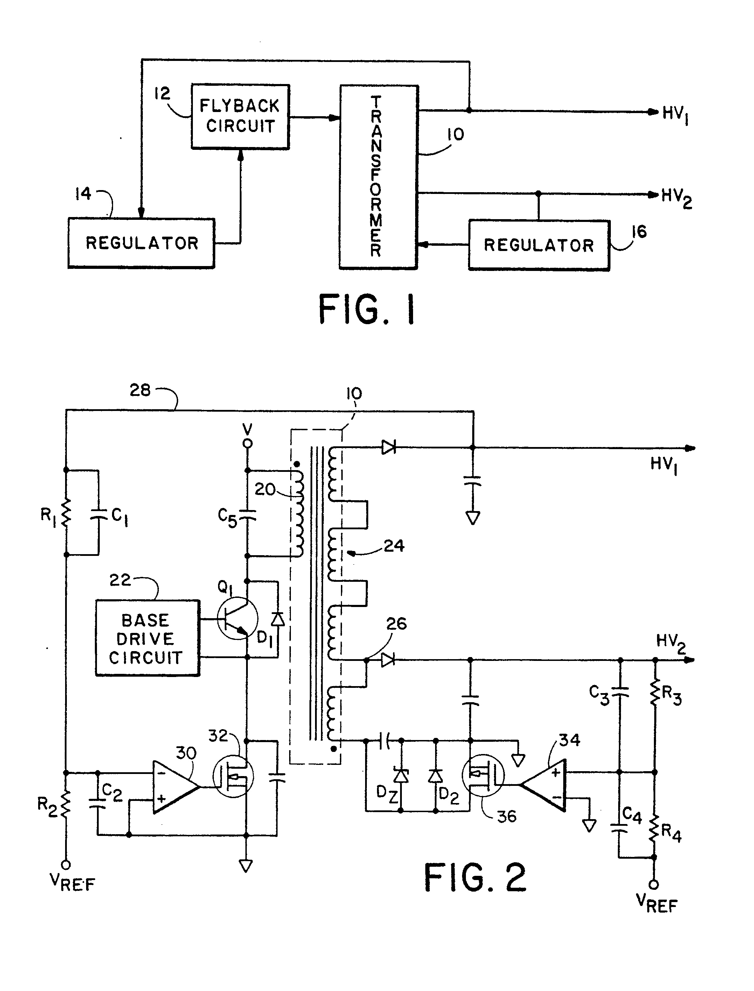

A preferred embodiment of the invention is described below by way of example only with reference to Figures 1 and 2 of the accompanying drawings.

### Brief Description of the Drawings

Figure 1 is a block diagram of a regulated high voltage supply according to the present invention, and

Figure 2 is a schematic diagram of an embodiment of the regulated high voltage supply of Figure 1.

### Description of the Preferred Embodiment

Referring now to Figure 1, a high voltage transformer 10 is energised by a flyback circuit 12 to produce a first high voltage output $HV_1$. $HV_1$ is sampled by a first regulator circuit 14 and an error signal, if any, from the first regulator circuit adjusts the drive of the flyback circuit 12 to correct for such fluctuations of $HV_1$. A second high voltage output $HV_2$ is taken off a tap of the high voltage transformer 10, $HV_2$ is sampled by a second regulator circuit 16 and an error signal, if any, changes the voltage at the lower end of the secondary of the high voltage transformer 10 to correct for such fluctuations in $HV_2$. The change in the lower end of the secondary of transformer 10 affects $HV_1$ which is regulated by the first regulator circuit 14. Thus, the two regulating circuits 14, 16 interact to regulate any fluctuations in either $HV_1$ or $HV_2$.

As shown in further detail in Fig. 2 the flyback circuit 12 is composed of the primary 20 of the transformer 10, capacitor $C_5$ connected across the primary and at one end to a voltage V, a switch transistor $Q_1$ connected to the other end of capacitor $C_5$, a catch diode $D_1$ connected across the collector to emitter of $Q_1$, and a base drive circuit 22 to drive $Q_1$. The secondary 24 of the transformer 10 is a plurality of windings connected in series, with $HV_1$ at the top of the secondary and $HV_2$ at an intermediate tap 26.

A sample of $HV_1$ is picked off by line 28 and is passed to the inverting input of a first error amplifier 30 via a first attenuator network of $R_1$-$C_1$ and $R_2$-$C_2$. The noninverting input of the error amplifier 30 is grounded. The output of the error amplifier 30 is input to the gate of a first field effect transistor (FET) 32. The source and drain of FET 32 are connected between the switch transistor $Q_1$ and ground.

A sample of $HV_2$ is picked off via a second attenuator circuit $R_3$-$C_3$ and $R_4$-$C_4$ and passed to the noninverting input of a second error amplifier 34. The inverting input of the error amplifier 34 is grounded. The output of the error amplifier 34 is input to the gate of a second FET 36. The source and drain of FET 36 are connected between the bottom of the secondary 24 and ground. Diodes $D_2$ and $D_z$ (a Zener diode) limit the voltage at the bottom of the secondary 24 to between approximately ground and the Zener voltage of $D_z$.

In operation a positive error in $HV_2$ cause the input of the second error amplifier 34 to go positive. The output of the error amplifier 34 is positive driving the output of FET 36, and thus the bottom of the secondary 24, negative. With the bottom of the secondary .24 going negative, HV$_1$ decreases, a negative fluctuation. This negative error is input to the first error amplifier 30 to produce a positive output to FET 32. The output of FET 32 goes negative increasing the voltage across switching transistor Q$_1$ to drive it harder, restoring HV$_1$. This introduces a smaller positive error to HV$_2$ and the loop continues until HV$_1$ and HV$_2$ are restored to their respective regulated values.

As an example assume that HV$_1$ is 19.5kV regulated and HV$_2$ is nominally 3.5 kV, but is actually 300 volts high. The amplifier 34/FET 36 loop will lower the bottom of the secondary 24 by 300 volts, thus correcting the 3.5kV supply error and lowering the 19.5kV supply to 19.2kV. The amplifier 30/FET 32 loop increases the voltage to switching transistor Q$_1$ by the ratio of 19.5/19.2, re-establishing the 19.5kV supply and causing a new error in the 3.5kV supply of the 19.5/19.2 ratio or 56 volts. Both loops repeat the correction step for a new 3.5kV error at 10 volts, then two volts, and then about 0.3 volts error. Thus, a 300 volt initial error in the 3.5kV supply requires approximately 368 volts of movement at the bottom of the secondary 24 to regulate the output.

Thus the present invention provides a high voltage supply with two regulated high voltages from a single high voltage secondary of a transformer. Although the invention is described in terms of a flyback transformer, those skilled in the art will recognize that the present invention applies equally well to other power supply topologies.

## Claims

1. A regulated voltage supply comprising transformer means (10, 12, 14, 16, 20) for generating a first (HV$_1$) and a second (HV$_2$) regulated voltage output, said supply including first regulating means (14) in a primary circuit of said transformer means for regulating said first output and second regulating means (16) for regulating said second output (HV$_2$) wherein said first and second regulating means interact with each other to correct for fluctuations in said first and second outputs, characterised in that said first and second outputs (HV$_1$, HV$_2$) are high-voltage outputs which are provided from different taps of a common secondary winding (24) of the transformer means (10, 12, 14, 16, 20), and said second regulating means is arranged to sample said second high voltage output(HV$_2$), the output of said second regulating means (16) being connected to the lower voltage end of said secondary winding (24), whereby an error signal, if any, is supplied for correcting the fluctuations in the second high voltage output (HV$_2$) and, by interaction, the first high voltage output (HV$_1$).

2. A regulated high voltage supply as claimed in claim 1 wherein said first regulating means (14 comprises: means (R$_1$, R$_2$) for sampling said first high voltage output (HV$_1$), said first high voltage output having a higher voltage than said second high voltage output (HV$_2$); means (30) for detecting fluctuations in said sampled first high voltage output to generate a first error signal; and first correcting means (32) responsive to said first error signal for correcting said first high voltage output for said fluctuations.

3. A regulated high voltage supply as claimed in claim 2 wherein said second regulating means (16) comprises: means (R$_3$, R$_4$) for sampling said second high voltage output (HV$_2$); means (34) for detecting fluctuations in said sampled second high voltage output to generate a second error signal; and second correcting means (36) responsive to said second error signal for correcting said second high voltage output for said fluctuations.

4. A regulated high voltage supply as claimed in claim 3 wherein said transformer means (10, 12, 14, 16, 20) comprises: a flyback transformer (10) including drive means (22) in a primary circuit thereof for producing said first and second high voltage outputs (HV$_1$, HV$_2$) in said secondary circuit.

5. A regulated high voltage supply as claimed in claim 4 wherein said first correcting means (32) is arranged to vary the output of said drive means (22) in response to said first error signal.

6. A regulated high voltage supply as claimed in claim 5 wherein said second correcting means (36) responsive to said second error signal for correcting said second high voltage output (HV$_2$) is arranged to vary the voltage of a low voltage end terminal of said secondary winding in response to said second error signal.

## Revendications

1. Alimentation de tension régulée comprenant des moyens de transformation (10,12,14,16,20) pour produire une première (HV$_1$) et une deuxième (HV$_2$) sorties de tensions régulées, ladite alimentation comportant des premiers moyens de régulation (14) dans un circuit primaire desdits moyens de transformation pour réguler la dite première sortie et des deuxièmes moyens de régulation (16) pour réguler

ladite deuxième sortie (HV$_2$), les dits premiers et deuxièmes moyens de régulation étant en interaction mutuelle pour corriger les fluctuations des dites première et deuxième sorties, caractérisée en ce que lesdites première et deuxième sorties (HV$_1$, HV$_2$) sont des sorties de haute tension qui sont obtenues à différentes prises d'un enroulement secondaire commun (24) des moyens de transformation (10,12,14,16,20), et lesdits deuxièmes moyens de régulation sont prévus pour échantillonner ladite deuxième sortie de haute tension (HV$_2$), la sortie desdits deuxièmes moyens de régulation (16) étant raccordée à l'extrémité de plus basse tension dudit enroulement secondaire (24), de sorte qu'un signal d'erreur, s'il y a lieu, est fourni pour corriger les fluctuations de la deuxième sortie de haute tension (HV$_2$) et, par interaction, celles de la première sortie de haute tension (HV$_1$).

2. Alimentation de haute tension régulée suivant la revendication 1, dans laquelle lesdits premiers moyens de régulation (14) comprennent : des moyens ( R$_1$, R$_2$) d'échantillonnage de ladite première sortie de haute tension (HV$_1$), ladite première sortie de haute tension ayant une tension supérieure à celle de ladite deuxième sortie de haute tension (HV$_2$) ; des moyens (30) de détection des fluctuations de ladite première sortie de haute tension échantillonnée, pour produire un premier signal d'erreur ; et des premiers moyens de correction (32) qui répondent audit premier signal d'erreur de manière à corriger lesdites fluctuations de ladite première sortie de haute tension.

3. Alimentation de haute tension régulée suivant la revendication 2, dans laquelle lesdits deuxièmes moyens de régulation (16) comprennent : des moyens (R$_3$, R$_4$) d'échantillonnage de ladite deuxième sortie de haute tension (HV$_2$) ; des moyens (34) de détection des fluctuations de ladite deuxième sortie de haute tension échantillonnée, pour produire un deuxième signal d'erreur ; et des deuxièmes moyens de correction (36) qui répondent audit deuxième signal d'erreur de manière à corriger lesdites fluctuations de ladite deuxième sortie de haute tension.

4. Alimentation de haute tension régulée suivant la revendication 3, dans laquelle lesdits moyens de transformation (10,12,14,16,20) comprennent un transformateur à retour (10) comportant des moyens d'excitation (22) dans son circuit primaire, pour produire les dites première et deuxième sorties de haute tension

(HV$_1$,HV$_2$) dans ledit circuit secondaire.

5. Alimentation de haute tension régulée suivant la revendication 4, dans laquelle lesdits premiers moyens de correction (32) sont agencés pour faire varier la sortie desdits moyens d'excitation (22) en réponse audit premier signal d'erreur.

6. Alimentation de haute tension régulée suivant la revendication 5, dans laquelle lesdits deuxièmes moyens de correction (36) répondant audit deuxième signal d'erreur pour corriger ladite deuxième sortie de haute tension (HV$_2$) sont agencés pour faire varier la tension d'une borne d'extrémité de basse tension dudit enroulement secondaire en réponse audit deuxième signal d'erreur.

## Patentansprüche

1. Konstantspannungsquelle mit einer Transformatoreinrichtung (10, 12, 14, 16, 20) zum Erzeugen einer ersten (HV$_1$) und einer zweiten (HV$_2$) konstanten Ausgnagsspannung, wobei die Quelle in einem Primärkreis der Transformatoreinrichtung eine erste Regeleinrichtung (14) zum Regeln der ersten Ausgangsspannung und eine zweite Regeleinrichtung (16) zum Regeln der zweiten Ausgangsspannung (HV$_2$) hat und die erste und die zweite Regeleinrichtung zur Korrektur von Schwankungen der ersten und der zweiten Ausgangsspannung miteinander zusammenwirken, dadurch gekennzeichnet, daß die erste und die zweite Ausgangsspannung (HV$_1$, HV$_2$) Ausgangs-Hochspannungen sind, die von verschiedenen Abgriffen einer gemeinsamen Sekundärwicklung (24) der Transformatoreinrichtung (10, 12, 14, 16, 20) abgegriffen werden, und daß die zweite Regeleinrichtung (16) mit dem Niedrigspannungsende der Sekundärwicklung (24) verbunden ist, so daß ein etwa abgegebenes Fehlersignal, das zur Korrektur von Schwankungen der Ausgangs-Hochspannung (HV$_2$) und durch Wechselwirkung zur Korrektur von Schwankungen der ersten Ausgangs-Hochspannung (HV$_1$) dient.

2. Konstant-Hochspannungsquelle nach Anspruch 1, dadurch gekennzeichnet, daß die erste Regeleinrichtung (14) eine Einrichtung (R$_1$, R$_2$) zum Abtasten der ersten Ausgangs-Hochspannung (HV$_1$) besitzt, wobei die erste Ausgangs-Hochspannung höher ist als die zweite Ausgangs-Hochspannung (HV$_2$), ferner eine Einrichtung (30) zum Erfassen von Schwankungen der abgetasteten ersten Ausgangs-Hochspannung und zum Erzeugen eines entsprechenden ersten Fehlersignals und eine erste Korrigiereinrichtung (32) zum Ausgleich der Schwankungen der ersten Ausgangs-Hochspannung durch Korrektur derselben auf Grund des ersten Fehlersignals.

3. Konstant-Hochspannungsquelle nach Anspruch 2, dadurch gekennzeichnet, daß die zweite Regeleinrichtung (16) eine Einrichtung ($R_3$, $R_4$) zum Abtasten der zweiten Ausgangs-Hochspannung ($HV_2$) besitzt, ferner eine Einrichtung (34) zum Erfassen von Schwankungen der abgetasteten zweiten Ausgangs-Hochspannung und zum Erzeugen eines entsprechenden zweiten Fehlersignals und eine zweite Korrigiereinrichtung (36) zum Ausgleich von Schwankungen der zweiten Ausgangs-Hochspannung durch Korrektur derstelben auf Grund des zweiten Fehlersignals.

4. Konstant-Hochspannungsquelle nach Anspruch 3, dadurch gekennzeichnet, daß die Transformatoreinrichtung (10, 12, 14, 16, 20) einen Rücklauftransformator (10) besitzt, der in einem Primärkreis eine Treibeinrichtung (22) zum Erzeugen der ersten und der zweiten Ausgangs-Hochspannung ($HV_1$, $HV_2$) in dem Sekundärkreis enthält.

5. Konstant-Hochspannungsquelle nach Anspruch 4, dadurch gekennzeichnet, daß die erste Korrigiereinrichtung (32) so eingerichtet ist, daß sie auf Grund des ersten Fehlersignals den Ausgang der Treibeinrichtung (22) verändert.

6. Konstant-Hochspannungsquelle nach Anspruch 5, dadurch gekennzeichnet, daß die zweite Korrigiereinrichtung (36) zur Korrektur der zweiten Ausgangs-Hochspannung ($HV_2$) auf Grund des zweiten Fehlersignals so eingerichtet ist, daß sie auf Grund des zweiten Fehlersignais die Spannung an Niedrigspannungsendanschluß der Sekundärwicklung verändert.

EP 0 183 504 B1

FIG. 1

FIG. 2